# EUROPEAN PATENT APPLICATION

(11) **EP 2 315 396 A1**
(43) Date of publication of application: **27.04.2011**
(21) Application number: 09806291.2
(22) Date of filing: 05.08.2009
(51) Int. Cl.: H04L 12/56

(54) **DEVICE OF USING THE PUSH MODE TO REALIZE THE NON-REAL-TIME MEDIA ROUTING AND METHOD THEREOF**

(30) Priority: 13.08.2008 CN 200810210503
(71) Applicant: ZTE Corporation, Shenzhen, Guangdong 518057 (CN)
(72) Inventor: FU, Qiang, Shenzhen Guangdong 518057 (CN)
(74) Representative: Wihlsson, Joakim Per Magnus
(86) International application number: PCT/CN2009/000880
(87) International publication number: WO 2010/017688

(57) **Abstract**

This invention discloses a device of using a push mode to realize non-real-time media routing, wherein a master control module is used for receiving a queuing request and a routing strategy, sending the queuing request to a pre-processing module, and sending the routing strategy to an appropriate routing queuing module; the pre-processing module is used for pre-processing the received queuing request, finding a pre-processing strategy according to the skills specified in the queuing request, calculating a user area code and service level, constructing the routing strategy according to the queuing request, the area code, the service level and the pre-processing strategy, and sending the routing strategy to the master control module; a routing queuing module is used for receiving the routing strategy, selecting seats according to the routing strategy, and allocating media to the selected seats. The invention also discloses a method of using a push mode to realize non-real-time media routing. The invention enables the Next Generation Call Center to have the non-real-time media routing and queuing capabilities, which improves functions of the Next Generation Call Center.

## Description

### TECHNICAL FIELD

The present invention relates to the field of Call Centers, particularly to a device and method of using a push mode to realize non-real-time media routing for the Next Generation Call Center.

### BACKGROUND

Also called the Customer Service System, the Call Center is an information system which provides users with multiple access means including telephone, fax, email, etc. It is largely used to process requests, doubts, complains, suggestions and inquiries made by users to a company, such as 1860 in the telecommunications industry and 95555 in the financial industry. At present, the IP-based Next Generation Call Center can provide users with voice service properly, but with the market getting increasingly demanding, the basic voice service is not enough to meet the demand, and it is imperative for the Call Center to support the non-real-time media.

No any device or method for the Next Generation Call Center to support the non-real-time media calls is found in the prior art.

### SUMMARY

To solve the existing technical problems, the present invention provides a device of using a push mode to realize non-real-time media routing which enables the Next Generation Call Center to have the non-real-time media routing and queuing capabilities and improves the functions of the Next Generation Call Center.

The present invention provides a routing device which uses the push mode to realize the non-real-time media routing. The device comprises a master control module, at least one pre-processing module and at least one routing queuing module.

The master control module is used for receiving a queuing request and a routing strategy, sending the received queuing request to an appropriate pre-processing module, and sending the received routing strategy to an appropriate routing queuing module.

The pro-processing module is used for finding a pro-processing strategy according to skills specified in the queuing request, calculating a user area code and service level, constructing the routing strategy according to the queuing request, the area code, the service level and the pre-processing strategy, and sending the routing strategy to the master control module.

The routing queuing module is used for receiving the routing strategy, selecting seats according to the routing strategy, and allocating the media to the selected seats.

Preferably, the routing queuing module is further used for returning a final queuing result to the master control module according to the selected seats; the master control module is further used for returning the final queuing result returned by the routing queuing module to a peripheral equipment.

Preferably, the master control module allocates the received queuing request to an appropriate pre-processing module according to the load balance principle.

Preferably, the master control module allocates the received routing strategy to an appropriate routing queuing module according to the virtual center number specified in the queuing request.

Preferably, the routing queuing module is further used for placing the queuing request into a call waiting queue, when no any idle seat is found; and when there is an idle seat, selecting an appropriate queuing request for the idle seat from the call waiting queue according to the queuing strategy.

The present invention also provides a method of using the push mode to realize the non-real-time media routing, which enables the Next Generation Call Center to have the non-real-time media routing and queuing capabilities and improves the functions of the Next Generation Call Center.

To solve the existing technical problems, the present invention also provides a routing method, which uses the push mode to realize the non-real-time media routing.

The method includes:
a master control module receives a queuing request from a peripheral equipment and forwards the queuing request to a pre-processing module;
the pre-processing module finds a corresponding pre-processing strategy according to skills specified in the queuing request, calculates a user area code and service level according to the pre-processing strategy, constructs the routing strategy according to the queuing request, the area code and the service level, and forwards the routing strategy to a routing queuing module by the master control module;
the routing queuing module selects seats according to the routing strategy and allocates media to the selected seats.

Further, the method also includes:
if no idle seat is found, the routing queuing module places the queuing request into a call waiting queue, and
if there is any idle seat, the routing queuing module selects an appropriate queuing request from the call waiting queue for the idle seat according to the queuing strategy.
Further, the routing strategy includes: routing according to skills, which is allocating the media to a seat which has the specified skills and has not processed the media for the longest time; or routing according to the seat group, which is allocating the media to a seat which has not processed the media for the longest time in the specified group; or routing according to the specified seat, which is allocating the media to the specified seat.

Further, the master control module allocates the received routing strategy to an appropriate routing queuing module according to the virtual center number specified in the queuing request.

Further, the master control module allocates the received queuing request to an appropriate pre-processing module according to the load balance principle.

The present invention enables the Next Generation Call Center to support the routing queuing of non-real-time media calls and have the non-real-time media routing and queuing capabilities, which perfects the functions of the Next Generation Call Center, and satisfies the demand of users for the non-real-time media calls, thereby can improve the product competitiveness and market share to bring significant economic and social benefits.

### BRIEF DESCRIPTION OF THE DRAWINGS

Fig. 1 is a structure diagram of the device of using the push mode to realize the non-real-time media routing of the present invention; and
Fig. 2 is a flowchart illustrating the Email processing of the Next Generation Call Center.

### DETAILED DESCRIPTION

In the following, the embodiment of this invention is described in detail in conjunction with the attached drawings.

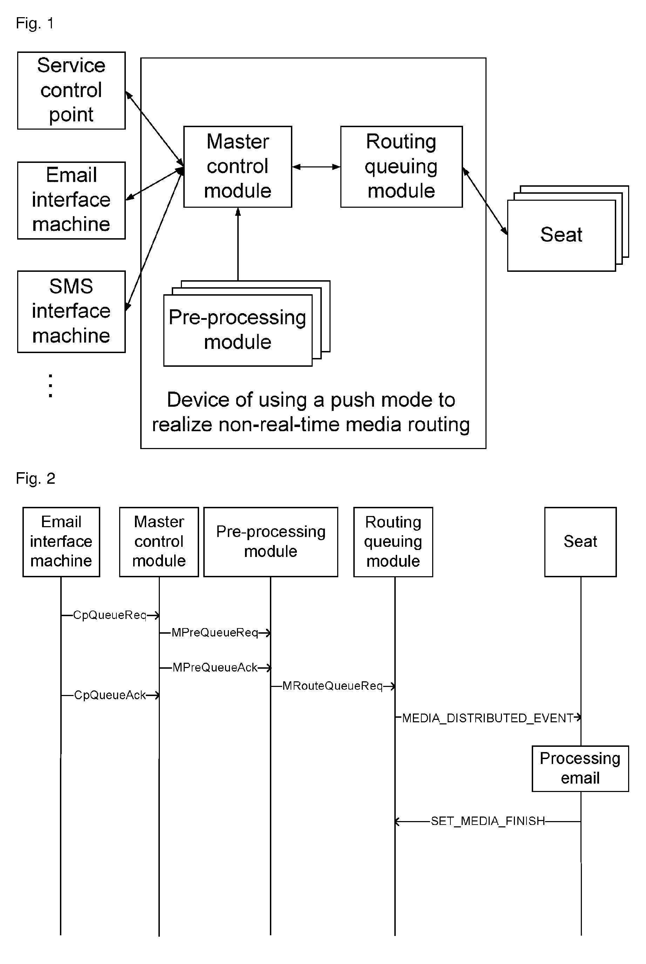

As shown in Fig. 1, which is a structure diagram of a device of using the push mode to realize the non-real-time media routing, the device comprises a master control module, several pre-processing modules and several routing queuing modules.

The master control module is used to access and allocate a queuing request and a queuing response. The master control module can shield differences among various peripheral systems (including intelligent network service control points, CSTA equipment and various interface machines), so as to process indistinguishably the queuing requests from various peripheral equipments. The master control module can also allocate the queuing requests uniformly to every pre-processing module according to the load balance principle and allocate the pre-processed queuing request to an appropriate routing queuing module according to the virtual center number specified in the queuing request. At the same time, the master control module can also return the final queuing result processed by the routing queuing module to the peripheral equipment correctly.

The pre-processing module is used to preprocess a queuing request. The pre-processing module finds a preset pre-processing strategy according to the skills specified in the queuing request, calculates a user area code and service level, constructs the routing strategy according to the media queuing request, the area code, the service level and pre-processing strategy, and sends the routing strategy to the master control module. The master control module finally sends the routing strategy to the routing queuing module.

The routing queuing module is used to execute the routing strategy, finds an appropriate seat for the queuing request, and returns a queuing result to the master control module according to the found seat. The queuing result is finally forwarded to the peripheral equipment by the master control module. If no idle seat which provides service for the queuing request can be found, the queuing request is placed into a call waiting queue; when there is an idle seat, the routing queuing module will select an appropriate queuing request for the seat from the call waiting queue according to the queuing strategy, and returns the queuing result to the master control module.

In the following, the method of using the push mode to realize the non-real-time media routing is described in detail in conjunction with the device of using the push mode to realize the non-real-time media routing.
1. The peripheral equipment sends a queuing request to the master control module and the master control module forwards the queuing request to an appropriate pre-processing module according to the load balance principle.
2. The pre-processing module finds the corresponding pre-processing strategy according to the skills specified in the queuing request, calculates a user area code and service level according to the pre-processing strategy, and inserts the queuing request into the media queue. After that, the pre-processing module returns a queuing response to the master control module and the master control module forwards the queuing response message to the peripheral system.
3. The pre-processing module constructs a routing strategy according to the queuing request, the area code and the service level, and forwards the routing strategy to a routing queuing module through the master control module.
4. The routing queuing module allocates media to appropriate seats according to the non-real-time media routing strategy.

The non-real-time routing strategy may be one of the following cases:
(1) Routing according to skills, that is allocating the media to a seat which has the specified skills and has not processed the media for the longest time ;
(2) Routing according to seat group, that is allocating the media to a seat which has not processed the media for the longest time in the specified group; and
(3) Routing according to specified seats, that is allocating the media to the specified seats.

After processing the media (such as reading an email), the seat notifies the routing queuing module that media processing is completed, thus the Call Center completes the processing of the media.

As shown in Fig. 2, which is the flowchart illustrating Email processing of the Next Generation Call Center, the method and device of the present invention are described as follows in detail by exemplifying how an email is processed in the Next Generation Call Center.

Step 201: The email interface machine initiates an email call queuing request to the master control module by a CpQueueReq message.

Step 202: The master control module selects a pre-processing module according to the load balance principle and sends an MPreQueueReq message to the pre-processing module.

Step 203: The pre-processing module calculates the service level and area code according to the MPreQueueReq message, inserts the call into a media queue, and sends a media queuing response MPreQueueAck message to the master control module.

Step 204: The master control module sends a queuing response CpQueueAck message to the email interface machine to notify that the media call has been accepted.

Step 205: The pre-processing module constructs the routing strategy according to the media queuing request, the area code, the service level and the pre-processing strategy, and sends the routing strategy to a routing queuing module by an MRouteQueueReq message.

Step 206: The routing queuing module selects the most appropriate seat according to the routing strategy and allocates the media to the seat by the MEDIA_DISTRIBUTED_EVENT message.

Step 207: After processing the media, the seat notifies the routing queuing module by a SET_MEDIA_FINISH message that the media processing is completed. The routing queuing module sets the media to be in a completion state, which is the end of processing.

### Industrial Applicability

The present invention enables the Next Generation Call Center to support the routing queuing of non-real-time media calls and have non-real-time media routing and queuing capabilities, which perfects the functions of the Next Generation Call Center, and satisfies the demand of users for the non-real-time media calls, thereby can improve the product competitiveness and market share top bring significant economic and social benefits.

## Claims

1. A device of using a push mode to realize non-real-time media routing, comprising: a master control module, at least one pre-processing module and at least one routing queuing module;
wherein the master control module is used for receiving a queuing request and a routing strategy, sending the received queuing request to an appropriate pre-processing module, and sending the received routing strategy to an appropriate routing queuing module;
the pre-processing module is used for finding a pre-processing strategy according to skills specified in the received queuing request, calculating a user area code and service level, constructing the routing strategy according to the received queuing request, the calculated user area code, the service level and the found pre-processing strategy, and sending the constructed routing strategy to the master control module; and
the routing queuing module is used for receiving the routing strategy, selecting seats according to the received routing strategy, and allocating the media to the selected seats.

2. The device of claim 1, wherein the routing queuing module is further used for returning a final queuing result to the master control module according to the selected seats;
the master control module is further used for returning the final queuing result returned by the routing queuing module to a peripheral equipment.

3. The device of claim 1, wherein the master control module sends the received queuing request to an appropriate pre-processing module according to the load balance principle.

4. The device of claim 1, wherein the master control module sends the received routing strategy to an appropriate routing queuing module according to the virtual center number specified in the queuing request.

5. The device of claim 1, wherein the routing queuing module is further used for:
when no any idle seat is found, placing the queuing request into a call waiting queue; and
when there is any idle seat, selecting an appropriate queuing request for the idle seat from the call waiting queue according to the queuing strategy.

6. A method of using a push mode to realize non-real-time media routing, including:
a master control module receiving a queuing request from a peripheral equipment and forwarding the received queuing request to a pre-processing module;
the pre-processing module finding a pre-processing strategy according to skills specified in the received queuing request, calculating a user area code and service level according to the found pre-processing strategy, constructing the routing strategy according to the received queuing request, the calculated user area code and the service level, and forwarding the constructed routing strategy to a routing queuing module by the master control module; and
the routing queuing module selecting seats according to the received routing strategy and allocating media to the selected seats.

7. The method of claim 6, the method further including:
when no any idle seat is found, the routing queuing module placing the queuing request into a call waiting queue; and
when there is any idle seat, the routing queuing module selecting an appropriate queuing request for the idle seat from the call waiting queue according to that the queuing strategy.

8. The method of claim 6, wherein the routing strategy includes:
routing according to skills, which is allocating the media to a seat which has specified skills and has not processed the media for the longest time; or
routing according to the seat group, which is allocating the media to a seat which has not processed the media for the longest time in the specified group; or
routing according to specified seat, which is allocating the media to the specified seats.

9. The method of claim 6, wherein the master control module allocates the received routing strategy to an appropriate routing queuing module according to the virtual center number specified in the queuing request.

10. The method of claim 6, wherein the master control module allocates the received queuing request to an appropriate pre-processing module according to the load balance principle.
